# EUROPEAN PATENT APPLICATION

(11) **EP 0 990 926 A2**
(43) Date of publication of application: **05.04.2000**
(21) Application number: 99307701.5
(22) Date of filing: 29.09.1999
(51) Int. Cl.: G02B 5/00, B29C 59/02

(54) **Mat surface structure**

(30) Priority: 30.09.1998 JP 27912098; 27.08.1999 JP 24194999
(71) Applicant: MAZDA MOTOR CORPORATION, Aki-gun, Hiroshima-ken (JP)
(72) Inventor: Fujii, Yutaka, Aki-Gun, Hiroshima-Ken (JP); Kajikawa, Hiroko, Aki-Gun, Hiroshima-Ken (JP); Mogi, Shigeo, Aki-Gun, Hiroshima-Ken (JP); Sasanishi, Kazuto, Aki-Gun, Hiroshima-Ken (JP)
(74) Representative: Messulam, Alec Moses

(57) **Abstract**

The object of the present invention is to provide an excellent matting effect by preventing a light reflected by a surface of a molded member from entering eyes of an observer. A great number of recessions 1 each being shaped into inverted triangle bottom pyramid or the like converging toward an apex thereof is continuously formed on the surface of the molded member and a structural adjacent angle formed by surrounding walls 2 of adjacent recessions 1 is determined not greater than 35 degrees (excluding 0 degree), or a great number of recessions each being shaped into inverted triangle bottom pyramid converging toward an apex thereof is continuously formed on the surface of the molded member and a structural adjacent angle formed by surrounding walls of adjacent recessions is determined within a range of 65 to 75 degrees.

## Description

### FIELD OF THE INVENTION

The present invention relates to a mat surface structure for reducing an intensity of reflected light from a material surface of an interior member of vehicle, an electrical equipment or the like.

### RELATED ART

Since a smooth surface of a molded member made of, for example, injection-molding material of synthetic resin does not provide matting effect but causes surface reflection (specular reflection) and thereby makes little high-grade impression, a high-grade appearance has been produced conventionally by applying a mat paint onto a surface of said molded member, which result in an increase of the number of manufacturing process and an inevitable increase of cost. Accordingly, as shown in, for example, Japanese Patent laid-Open Publication No. Hei 9-239739, minute roughness is formed on a surface of a forming mold for forming said molded member by the use of chemical, sand, glass bead or the like so that the minute roughness may be formed on the surface of the member formed using this forming mold to provide mat surface.

Though forming minute roughness on the surface of the molded material provides, as described above, a certain level of matting effect by causing an incident light onto said surface of the molded material to be irregularly reflected, there is also provided a problem that this irregular reflection increases a lightness of the surface of the molded material causing so-called white fading, which leads to a problem that a pure matting effect is not provided.

Accordingly, the conventional art described in the above patent publication intends to provide a deep impression to an outer surface of the molded material by forming thereon a gloss-less portion made up of minute roughness and a glossy portion composed of projections scattered within said gloss-less portion to bring a contrast thereon.

However, since the pure matting structure cannot be made even if the glossy portion is formed so as to bring the contrast of gloss as described above, there occurs a problem that a visibility of indicators of instruments cannot be improved, for example, when the above described surface structure is applied onto a background of the instruments and, at the same time, when said surface structure is applied to an interior member of a vehicle, a reflected light from said interior member is projected onto a wind shield glass to inevitably deteriorate the visibility therethrough.

Further, it is known that, as shown in Japanese Patent Publication No. Hei 5-40647, the matting effect with mild impression may be accomplished by forming on a surface of the synthetic resin layer a great number of recessions, each being shaped into inverted minute pyramid converging toward inward, by the use of a sheet for separating which has a separating surface at least on one side surface, on which is formed a group of minute projection composed of great number of minute projections each being shaped into pyramid converging outward.

The prior art described in the above patent publication, however, discloses the subject matters that the matting effect with mild impression is accomplished by forming pyramid-shaped recessions on the surface of the synthetic resin layer, but does not disclose anything about conditions such as an angle between surrounding walls forming pyramid-shaped recession described above, leaving a problem that, depending on said conditions, there might not be provided sufficient matting effect. Further, said patent publication does not suggest anything about a relation between a shape of the pyramid and an angle formed by said surrounding walls, that is, it does not suggest what degree of angle formed by the surrounding wall would provide pure matting effect when said recession is formed by a triangle bottom pyramid.

### SUMMARY OF THE INVENTION

In the light of the problems above, the present invention is to provide a mat surface structure in which the reflected light from the surface of the molded material is prevented from entering the eyes of an observer to accomplish excellent matting effect.

The present invention defines a mat surface structure characterized in that a great number of recessions or projections, each converging toward an apex thereof, are formed continuously on a surface of a molded member and a structural adjacent angle formed between surrounding walls of adjacent recessions or projections is determined not greater than 35 degrees (excluding 0 degree).

According to the above configuration, an incident light onto the surface of the molded member causes multiple reflections and, as the reflection is repeated, the quantity of reflected light is reduced gradually and thereby most of the light is absorbed by said molded member to provide an excellent matting effect.

Another aspect of the present invention, the present invention defines a mat surface structure characterized by that a great number of recessions, each being shaped into inverted triangle bottom pyramid converging toward an apex thereof, are formed continuously on a surface of a molded member and a structural adjacent angle formed between surrounding walls of adjacent recessions is determined within a range of 65 to 75 degrees.

According to the above configuration, since an incident light onto the surface of the molded member is retlected in approximate parallel with itself, there is little light reflected toward the eyes of the observer and thereby an excellent matting effect may be provided.

In a preferred embodiment of the present invention, a great number of recessions converging toward respective apexes thereof are formed continuously on the surface of the molded member, said mat surface structure is characterized in that a width of ridge lines formed on an outermost surface of said molded member is determined within a range of 0.01 to 0.1 mm and a center line average height of said ridge lines is determined within a range of 0.5 to 20 µm.

According to the above configuration, even if the ridge lines formed on the outermost surface of the molded material are defectively molded, the quantity of the reflected light from the ridge lines is minimized and thereby an excellent matting effect may be provided.

Preferably, a great number of recessions, each being shaped into inverted pyramid converging toward an apex thereof, are formed continuously on the surface of the molded member, said mat surface structure is characterized in that a side length of said ridge lines of the recessions is determined not less than 5 mm.

According to the above configuration, there is provided an advantage that, even if the ridge lines formed on the outermost surface of the molded material are damaged, the damaged portion is not conspicuous because of a small proportion of ridge line area to that of the overall surface.

According to another feature of the present invention defines a mat surface structure characterized by that a great number of projections, each converging toward an apex thereof, are formed continuously on a surface of a molded member and a structural adjacent angle formed between surrounding walls of adjacent projections is determined not greater than 50 degrees (excluding 0 degree).

According to the above configuration, when there is a certain relation between an incident light angle onto the surface of the molded member and a sight line angle of the observer to said molded member, there is little light reflected toward the sight line of the observer, and thereby an excellent matting effect may be provided.

In a preferred embodiment, a great number of recessions or projections are formed continuously on a surface of an interior member of a vehicle.

According to the above configuration, the reflected light from the surface of the interior member arranged in the vehicle compartment never reaches the eyes of the passengers therein, and thereby an excellent matting effect may be provided.

In further preferred embodiment, a great number of the recessions, each being shaped into inverted triangle bottom pyramid converging toward an apex thereof, are formed continuously on a surface of an interior member of a vehicle excluding an area within a range of 10 to 25 degrees of horizontal angle and within a range of 20 to 30 degrees of vertical angle with respect to a sight line of a driver.

According to the above configuration, the incident light onto the surface of the interior members arranged on other places than those defined as above is reflected toward other directions than that for the sight line of the driver, and thereby an excellent matting effect may be provided.

Preferably, a great number of the recessions or projections are formed continuously on a background of instruments.

According to the above configuration, since the reflected light from the background of the instruments does not enter the eyes of the observer, wider contrast is brought between the indicators of the instruments and said background thereof, which improves visibility of the indicators.

In a preferred embodiment, when said mat surface structure is formed on a curved surface of a molded member with a specified curvature, the structural adjacent angle is compensated in response to a radius of curvature of said curved surface and an arranging pitch of the recessions.

According to the above configuration, when the mat surface structure on which is continuously formed a great number of recessions converging toward the apexes thereof are formed on the curved surface of the molded member, the structural adjacent angle between the surrounding walls of said recessions is modified to a specific angle, and thereby an excellent matting effect may be provided.

Preferably, a great number of recessions, each being shaped into an inverted triangle bottom pyramid converging toward an apex thereof, are formed continuously on a surface of a molded member and a structural adjacent angle between surrounding walls of adjacent recessions is determined not greater than 70.6 degrees (excluding 0 degree).

According to the above configuration, when there is a certain relation between an incident light angle onto the surface of the molded member and a sight line angle of the observer to said molded member, there is little light reflected toward the sight line of the observer, and thereby an excellent matting effect may be provided.

### BRIEF DESCRIPTION OF THE DRAWINGS

Fig. 1 is a plan view illustrating an embodiment of the mat surface structure according to the present invention;
Fig. 2 is a perspective view of said mat surface structure;
Fig. 3 is a cross sectional view taken on line A-A of Fig. 1;
Fig. 4 is an explanatory drawing illustrating a reflection of an incident light into the recession;
Fig. 5 is another explanatory drawing illustrating a reflection of an incident light into the recession;
Fig. 6 is a plan view illustrating an example in which the mat surface structured members are arranged in the vehicle compartment;
Fig. 7 is a side view illustrating an example in which the mat surface structured members are arranged in the vehicle compartment;
Fig. 8 is a plan view illustrating another embodiment of the mat surface structure according to the present invention;
Fig. 9 is a cross sectional view taken on line B-B of Fig. 8;
Fig. 10 is an explanatory drawing illustrating another example of a reflection of an incident light into the recession;
Fig. 11 is a table showing an evaluation data of the matting effect of the mat structure having circular cone-shaped recessions;
Fig. 12 is a graph illustrating a relation between an apex angle of the surrounding walls and a quantity of incident light into the eye range;
Fig. 13 is an explanatory drawing illustrating a condition in which the mat structure is applied onto the curved surface;
Fig 14 is an explanatory drawing illustrating another embodiment of the mat surface structure according to the present invention;
Fig. 15 is an explanatory drawing illustrating adjacent condition of the projections;
Fig. 16 is a graph illustrating a relation between a structural adjacent angle of projections and a specular gloss;
Fig. 17 is a graph illustrating a relation between a structural adjacent angle of recessions and a specular gloss;
Fig. 18 is a plan view illustrating ridge lines formed on the outermost surface of the mat structure; and
Fig. 19 is an explanatory illustrating an embodiment of paint-spraying method for the mat structure;
wherein, reference numeral 1 designates a recession; each of 2, 2a, 2b, 3a and 3b designates a surrounding wall; 3 designates a projection; 4 designates a ridge line; and θ designates a structural adjacent angle.

### DETAILED DESCRIPTION OF THE PREFERRED EMBODIMENTS

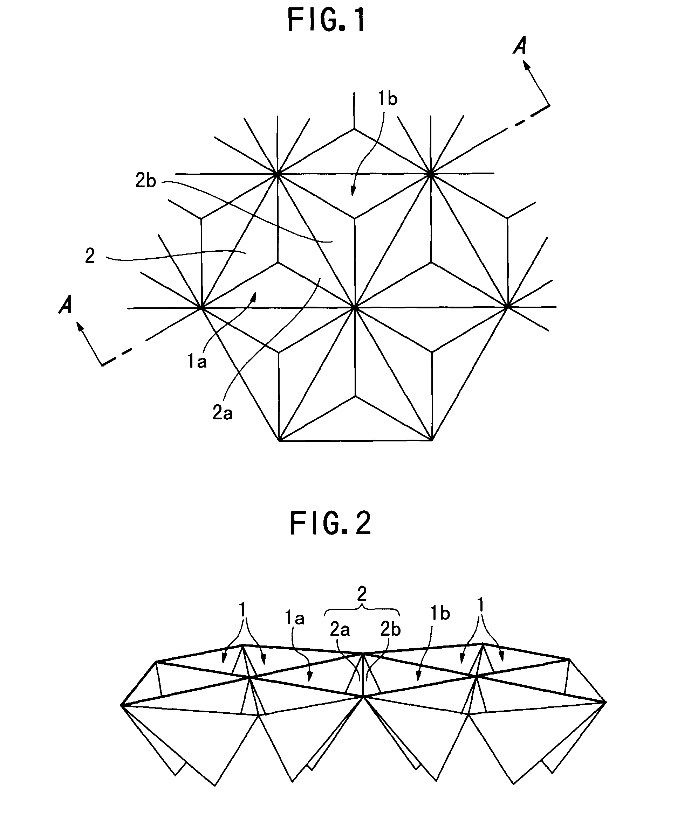

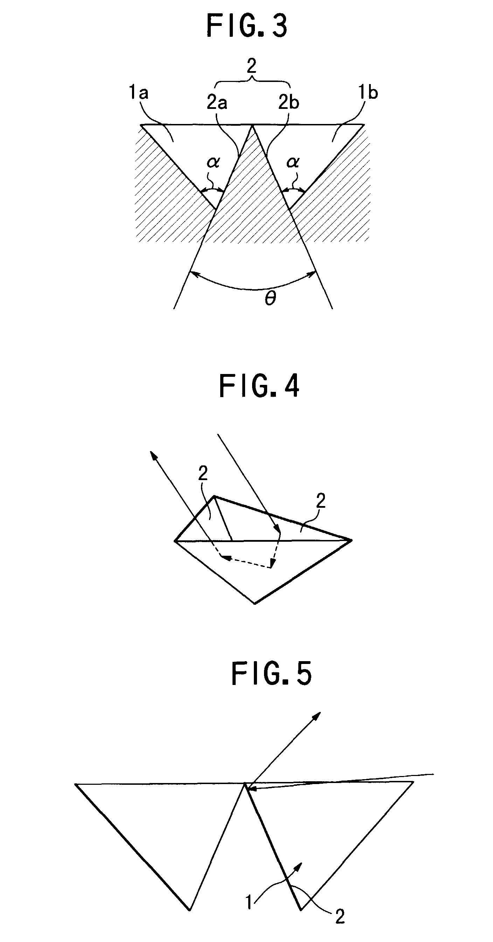

Figs. 1 and 2 show an embodiment of mat surface structure according to the present invention. This mat surface structure is composed of a great number of continuous recessions 1 each of which is shaped into inverted equilateral triangle bottom pyramid converging toward the apex thereof, which is made up of an equilateral triangle-shaped bottom face and three isosceles triangle-shaped surrounding walls 2. As shown in Fig. 3, each of said surrounding walls 2 of said recession 1 is formed approximately into a right-angled isosceles triangle having 90 degrees of apex angle since a structural adjacent angle θ formed between surrounding walls 2a and 2b of adjacent recessions 1a and 1b is set to 70.6 degrees. Though a size of said recession 1 is not limited to a certain value, a base side length of the surrounding walls 2 is preferably determined within a range of 0.5 mm to several hundreds mm from a viewpoint of moldability thereof, and more preferably less than several mm especially for a small member arranged near to the observer on condition that, in particular, the ridge lines are not subjected to damages.

To form above mat surface structure, a great number of recessions 1 each converging toward an apex thereof are formed first on a surface of a resin-made original form, which has been previously formed into specified profile, by the use of milling cutter with a great number of teeth each having shape corresponding to that of said recession 1, then a forming mold for injection molding is made using said original form so that a great number of projections each of which corresponds to said recession 1 are formed continuously on a cavity of said forming mold. Then, synthetic resin material is injected into said cavity of the forming mold to form a molded member of synthetic resin having a great number of recessions 1, which correspond to said projections, formed on a surface thereof.

When said molded members are disposed to respective locations in a vehicle compartment as interior members of a vehicle, incident lights onto said molded members from inside or outside of the vehicle are prevented from being reflected toward an eye position of passenger, and thereby an excellent matting effect may be provided. That is, most of the incident light into the recession 1, which is formed as an inverted equilateral triangle bottom pyramid converging toward the apex thereof and whose surrounding walls 2 are formed as right-angled isosceles triangle as described above, is reflected, as shown in Fig. 4, by a surrounding wall 2 and then is re-reflected by other surrounding walls 2 and finally goes out of the recession 1 in the direction parallel with said incident light.

As described above, the reflected light from the recession 1, which is formed as an inverted equilateral triangle bottom pyramid converging toward the apex thereof and whose surrounding walls 2 are formed as right-angled isosceles triangle, enters the eyes of the observer only when the right is emitted from behind a head of the observer toward the recession 1, and, since said light from behind the head of the observer is blocked by the head of the observer, it never reaches the recession 1. AS a result, there is also no light which is reflected by said molded member and reaches the eyes of the observer, which means that the excellent matting effect is provided.

Employing the molded member with a great number of recessions 1 formed continuously on the surface thereof as an interior member of the vehicle prevents the light reflected by the interior member from entering the eyes of the passenger without any troublesome operation such as an application of mat paint on the surface of the interior member. Therefore, the situation where the passenger's eyes are dazed by the glare due to the reflected light from said interior member causing a deterioration of the visibility for the outer field may be avoided, and, at the same time, a white fading caused by an irregular reflection of the incident lights onto said molded member may be also prevented, and thereby a quality impression of the interior member may be effectively improved.

Applying the molded member with said recession 1 formed continuously on the surface thereof to a background of instruments composed of a speedometer or the like prevents the lights reflected by said background from entering the eyes of the observer allowing only the reflected lights from the indicators composed of an index of the speedometer or the like to reach the eyes of the observer, which means that the visibility for the indication of the instruments may be effectively improved.

Though above described embodiment employs an arrangement in which the structural adjacent angle θ is set to 70.6 degrees so as for the surrounding walls 2 composing said recession 1 as right-angled isosceles triangle so that the directions of the incident light into said recession 1 and the reflected light out of the recession 1 coincide correctly with each other, the similar effect to that of the above embodiment can be expected when said structural adjacent angle θ is determined within the range of 65 to 75 degrees. That is, when the structural adjacent angle θ is less than 65 degrees or more than 75 degrees, the incident light into the recession 1 from near to the head of the observer has a possibility to be reflected back to the direction toward the eyes of the observer, while little light is reflected toward the eyes of the observer to provide excellent matting effect when the structural adjacent angle θ is determined within the range described above.

In the mat structure on which is formed a great number of recessions 1 each being shaped to an inverted triangle bottom pyramid converging toward an apex thereof as described above, as shown in Fig. 5, when the incident light comes from a direction almost along the outermost surface of the mat structure, said incident light to near to a base portion of the recession 1 is reflected directly out of the recession 1 and sometimes enters the eyes of the observer resulting in no matting effect. Therefore, it is preferable that the mat structure is disposed in a position where the reflection of the incident light to near to the base portion of the recession 1 does not reach the eyes of the observer.

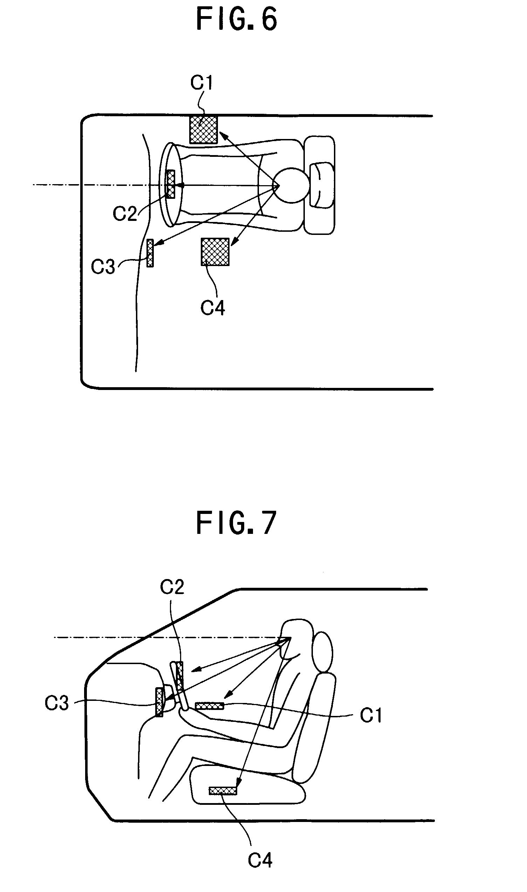

For example, when an experiment was implemented for observing the reflected light entering into the eyes of the driver while irradiating lights into the vehicle compartment from various directions under a condition where, as shown in Figs. 6 and 7, said mat structures are arranged in a first sight line area C1 located in the right lower side of the driver and defined by a horizontal angle range of -40 to -60 degrees and a vertical angle range of 40 to 60 degrees with respect to the sight line of the driver, a second sight line area C2 located in front of the driver and defined by a horizontal angle range of approximate 0 degree and a vertical angle range of 20 to 30 degrees with respect to the sight line of the driver, a third sight line area C3 located in the slightly left front direction of the driver and defined by a horizontal angle range of 10 to 25 degrees and a vertical angle range of 20 to 30 degrees with respect to the sight line of the driver, and a fourth sight line area C4 located in the left lower side of the driver and defined by a horizontal angle range of 50 to 80 degrees and a vertical angle range of 60 to 80 degrees with respect to the sight line of the driver, no reflected light entering the eyes of the driver is observed with an exception of that from said third sight line area C3.

Therefore, the excellent matting effect can be accomplished when the mat structure, in which a great number of recessions is continuously formed thereon, each being shaped into inverted triangle bottom pyramid converging toward the apex thereof, and the structural adjacent angle θ formed between surrounding walls 2 of the adjacent recessions 1 is determined within a range of 65 to 75 degrees, is formed on the surface of the molded members as the interior members located in other areas than the third sight line area C3 defined by a horizontal angle range of 10 to 25 degrees and a vertical angle range of 20 to 30 degrees with respect to the sight line of the driver. Said horizontal angle is represented by plus value when the driver's sight line is directed in the left side and by minus value when directed in the right side.

Though the description of the above embodiment has been developed in the case where the interior member with said mat structure formed thereon is arranged within direct view fields of the passenger, the application of the interior member with said mat structure should not be limited to such fields but may be arranged on an upper portion of an instrument panel. when said mat structure is applied to the upper portion of the instrument panel, so-called image reflection, which means that an upper surface of the instrument panel is reflected on a wind shield glass, may be prevented, so that the situation where the visibility for the outer field is suffered from said image reflection while viewing outside through the wind shield glass can be effectively prevented.

The application of the mat structure according to the present invention is not limited to the interior members and the background of the instrument board of the vehicle but it may be applied to any places and devices where the control of the light reflection is desired, for example, an exterior decorative board of electric equipment, a face of a clock or the like. It is preferable that said mat structure is applied to a member having a transparent plate attached on a surface side thereof, such as the background of the instrument board or the face of the clock, since the matting effect is effectively prevented from being subjected to any fear for damage and dirt thereof.

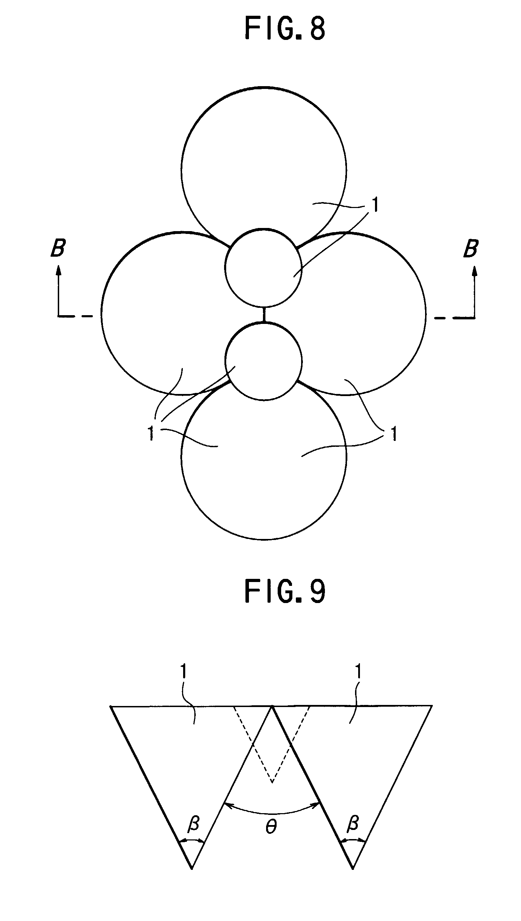

In addition, when a great number of recessions, each being shaped as an inverted polygonal bottom pyramid such as triangle bottom pyramid, quadrangle bottom pyramid, hexagonal bottom pyramid, octagonal bottom pyramid, or inverted circular cone as shown in Figs. 8 and 9, each converging toward an apex thereof, are formed continuously on the surface of the molded member and the structural adjacent angle θ formed between surrounding walls 2 of adjacent recessions is determined not greater than 35 degrees (excluding 0 degree), similar or superior matting effect may be expected comparing with the case where said structural adjacent angle θ is determined within the range of 65 to 75 degrees.

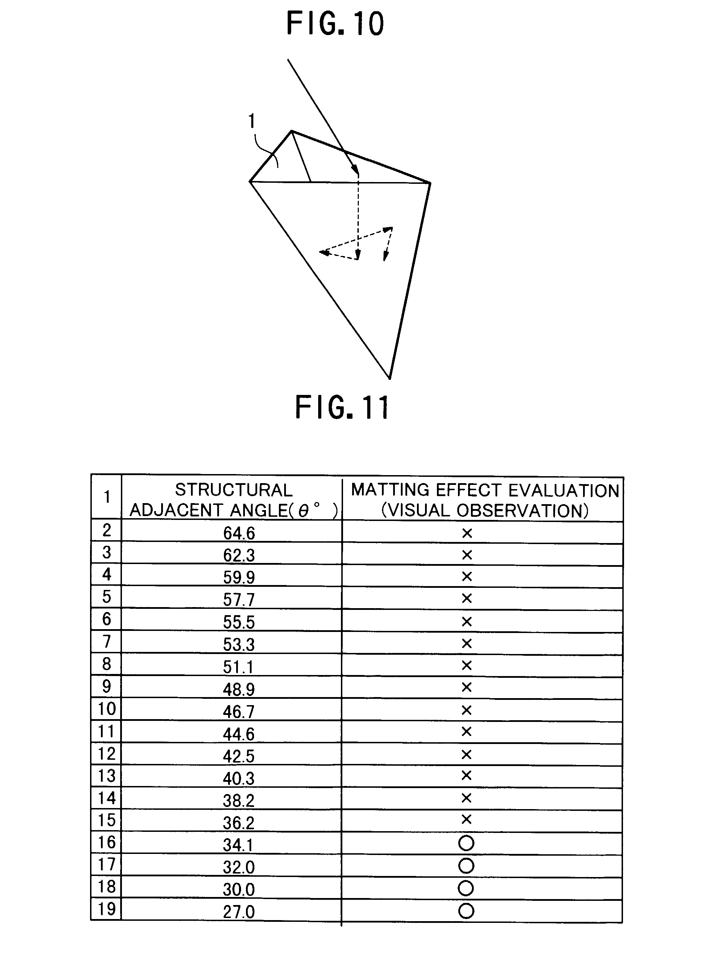

For example, when the structural adjacent angle θ of the recessions each being shaped into inverted triangle bottom pyramid is determined not greater than 35 degrees and an apex angle of the recession 1 is formed to have an acute angle as shown in Fig. 10, the incident light into this recession 1 is repeatedly reflected in it and thereby the quantity of the reflected light going out of the recession 1 can be remarkably reduced. Further, the data shown in Fig. 11 is derived from the experiment for examining the matting effect by observing if there being the reflected light in response to the lights irradiated from various direction into said recessions 1 which are inverted circular cones converging toward apexes thereof as shown in Fig. 8 and 9 and whose structural adjacent angle θ varies from 64.6 to 27.9 degrees.

According to the above data, it was found that sufficient matting effect could not be obtained when the structural adjacent angle θ of the recessions 1 composed of circular cones was set to 36.2 degrees, while an excellent matting effect could be accomplished when it was determined less than 34.1 degrees, that is, less than about 35 degrees. This means that, when the structural adjacent angle θ of the recessions 1 is determined not greater than 35 degrees, consequently an apex angle β of the recession 1 is not greater than 35 degrees, so that there occurs multiple reflection where the incident light into the recession 1 is repeatedly reflected in it and the quantity of reflected light decreases for each reflection and finally quite a small quantity of light goes out of the recession 1.

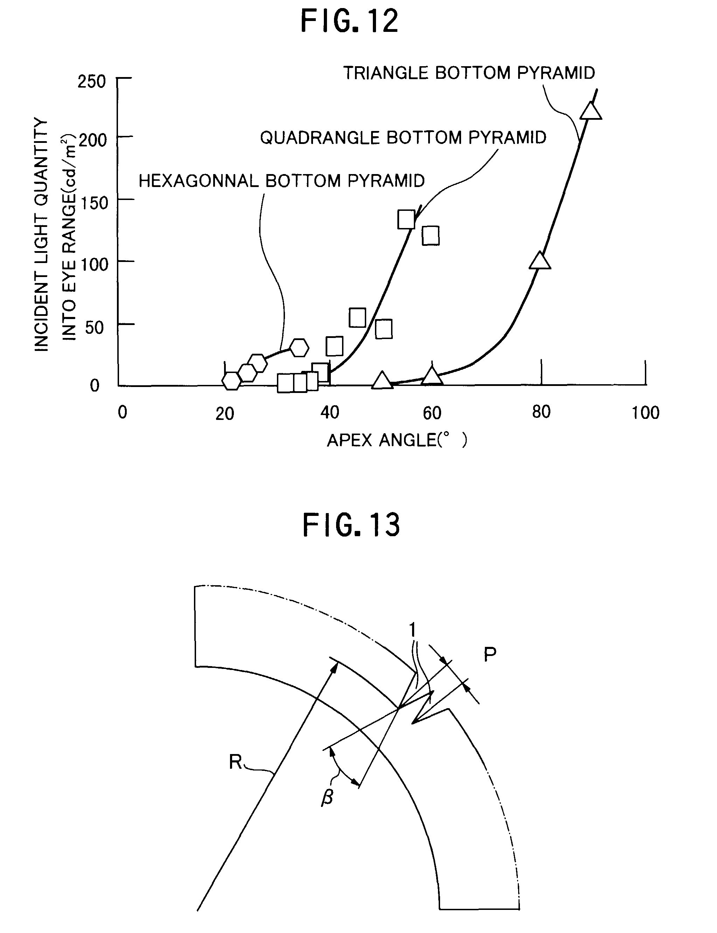

Further, the data shown in Fig. 12 is derived from the experiment for measuring the quantity of incident light entering into the eyes of the observer (quantity of incident light into eye range) with various apex angles α of surrounding walls 2 of recessions 1 each being composed of regular triangle bottom pyramid, regular square bottom pyramid or regular hexagonal bottom pyramid. According to these data, it was found that the excellent matting effect could be accomplished when, in the regular triangle bottom pyramid-shaped recessions 1, the apex angle α was 55 degrees and the structural adjacent angle θ was not greater than 35 degrees. It was also found that the excellent matting effect could be accomplished when, in the regular square bottom pyramid, the apex angle α was 33.5 degrees, which could be converted into the structural adjacent angle θ being not greater than 33.5 degrees, and when, in the regular hexagonal bottom pyramid, the apex angle α was not greater than 20 degrees and the structural adjacent angle θ is not greater than 35 degrees.

To accomplish said excellent matting effect by setting the structural adjacent angle of the recessions 1 not greater than 35 degrees as described above and thereby causing the multiple reflection of the incident light into said recessions 1, it is preferable to color the surface of the surrounding wall 2 of the recession 1 with black or other colors having lightness equivalent thereto, for example, gray color near to black or dark brown color which have low lightness. In addition, since the incident light onto the surface of the molded member is prevented from being irregularly reflected even if the surface of the surrounding wall 2 is colored with other colors such as yellow or blue color, the white fading on the surface of said molded member is efficiently prevented and the color on the surface may be exactly represented, so that the quality impression of the molded member can be remarkably improved.

Though the above description of the embodiment has been developed on the mat surface structure of the molded member formed flat, the present invention may be applied also, as shown in Fig. 13, to the mat structure on a curved surface. In this case, since the structural adjacent angle θ varies in response to a radius of curvature R of the curved surface and an arranging pitch P of the recession 1, the structural adjacent angle θ should be compensated in response to said radius of curvature R and the arranging pitch P of the recession 1.

That is, an excellent matting effect will be accomplished by compensating the structural adjacent angle θ of the curved surface by subtracting a compensation angle sin-(P/R) derived from the radius of curvature R and the arranging pitch P of the recession 1 from the structural adjacent angle θ of the mat structure formed on the flat member and by continuously forming said recession 1 thereon based on the compensated structural adjacent angle θ.

It is preferable also to form the recessions 1 continuously based on said compensated structural adjacent angle θ when said mat structure is formed as a flat member and then is attached on the curved surface. At that time, since the apex angle β of the recession 1 is made small in response to the compensation of the structural adjacent angle θ, the excellent matting effect may be accomplished even if the apex angle β of the recession 1 is made larger when said flat mat structure is curved and attached onto the curved surface.

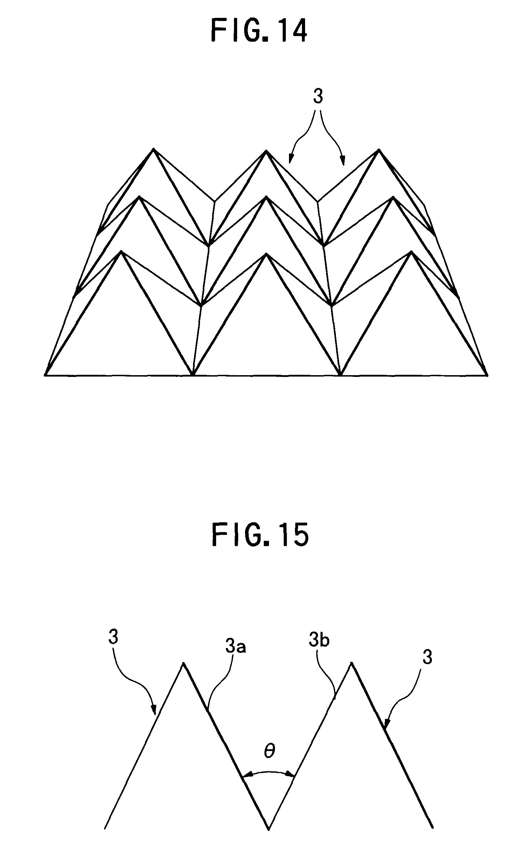

Though the above description of the embodiment has been developed on the example where the recessions 1 are formed on the surface of the molded member composing said mat structure, such structure may be employed where, as shown in Fig. 14 and 15, a great number of projections 3 each being shaped into triangle bottom pyramid, quadrangle bottom pyramid or hexagonal bottom pyramid converging toward the apex thereof are formed continuously and the structural adjacent angle θ is determined not greater than 50 degrees (excluding 0 degree).

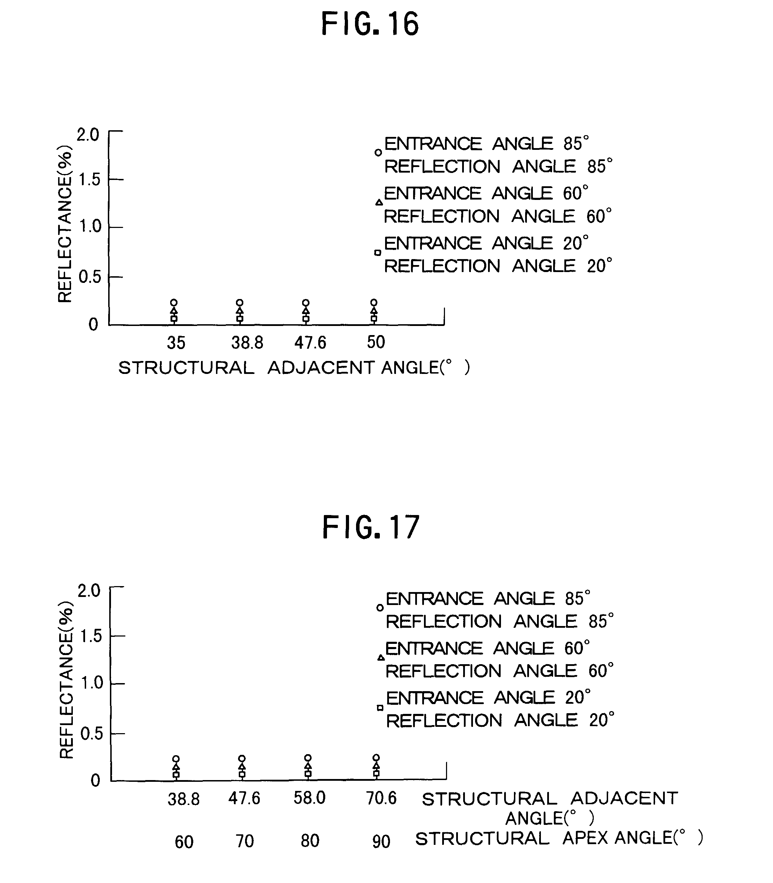

That is, the data shown in Fig. 16 is derived from the experiment in which the specular gloss defined by the light reflectance is measured according to the specular gloss method specified in JIS Z 8741 on the mat structures each having the structural adjacent angle θ of 35, 38.8, 47.6 or 50 degrees formed between surrounding walls 3a and 3b of the projections 3 each being shaped into triangle bottom pyramid or quadrangle bottom pyramid. According to this data, it was found that specular gloss was not greater than 0. 5 % and an excellent matting effect could be accomplished when an entrance angle of the light from a light source to said mat structure and a reflection angle of the light to a light receiver were set to either of 20, 60 or 85 degrees.

Especially when the structural adjacent angle θ formed between the surrounding walls 3a and 3b of said projections is determined not greater than 35 degrees (excluding 0 degree), there is provided an advantage that an excellent matting effect may be always accomplished without regard to the relation between the incident angle of the light onto the surface of the molded member and a sight line angle of the observer to the molded member as in the case of said recession 1.

Further, the data shown in Fig. 17 is derived from the experiment in which the specular gloss is measured according to the specular gloss method specified in JIS Z 8741 on the mat structures in which a great number of recessions 1, each being shaped into inverted triangle bottom pyramid or quadrangle bottom pyramid converging toward the apex thereof, are formed continuously on the surface of the molded member and the structural adjacent angle θ formed between surrounding walls of the adjacent recessions is determined not greater than 70.6 degrees. According to this data, it was found that little light was reflected toward the eyes of the observer and thereby the excellent matting effect was accomplished when there was a certain relation between the incident angle of the light onto the surface of the molded member and the sight line angle of the observer to the molded member.

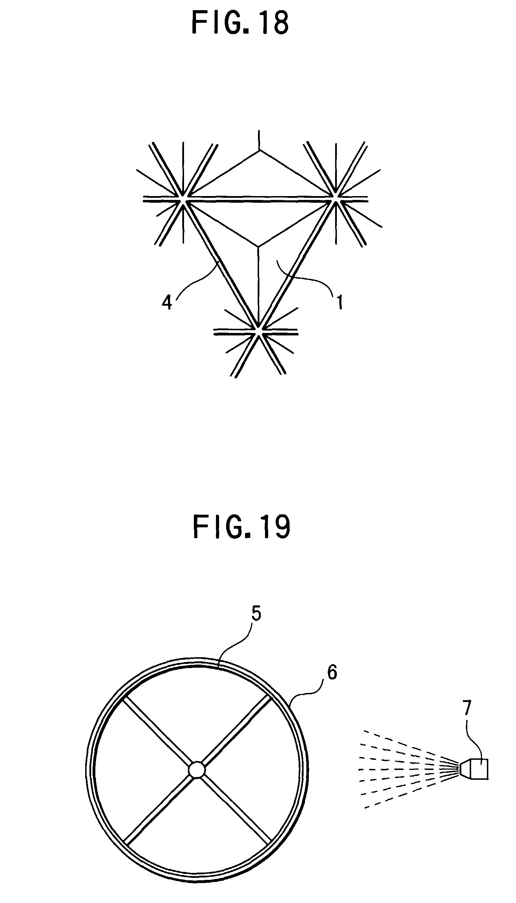

When the mat structure composed of a continuity of the recessions 1, each being shaped into inverted triangle bottom pyramid, quadrangle bottom pyramid or the like, are formed using a forming mold for injection molding, ridge lines 4 having predetermined width are formed on an outermost surface thereof as shown in Fig. 18, and the matting effect of the mat structure described above may be damaged if said ridge lines could not be formed into proper shapes. That is, when synthetic resin material such as PP, ABS, PA or the like is injected into a cavity of said forming mold to form said mat structure, if there occurs defective charging resulting in said ridge line 4 being round-shaped or V-shape dented, sufficient matting effect would not be accomplished due to a specular reflection of the light on the defectively formed portion.

To prevent the deterioration of the matting effect caused by said defective forming, it is preferable that a width of said ridge lines 4 formed on the outermost surface of the molded member with said mat structure formed thereon is determined within a range of 0.01 to 0.1 mm and a center line average height Ra of said ridge lines 4 is determined within a range of 0.5 to 20 µm so that said specular reflection of the light may be controlled. For example, on the process for making said forming mold for injection molding, groove bottom portions of the cavity of the forming mold for forming said ridge lines 4 is firstly finished into flat face and then minute roughness is formed thereon by applying shot blasting, plasma treatment, ion treatment, chemical treatment or the like to set the center line average height Ra of said ridge lines 4 within the range of 0.5 to 20 µm. Thereby, the specular reflection of the light on said ridge lines 4 may be controlled and consequently the deterioration of the matting effect can be prevented.

Further, when the mat structure having a continuity of recessions 1, each being shaped into said inverted triangle bottom pyramid or quadrangle bottom pyramid, is formed using said forming mold for injection molding, a certain degree of matting effect may be expected also by employing material having matting effect in itself as synthetic resin material injected into the cavity of the forming mold and thereby reducing the specular reflection of the light on said ridge lines 4. For example, said specular reflection of the light may be reduced by adding an additive such as rubber, talc or the like to PP material so that minute roughness may be formed on the surface of the molded member by said additive. At that time, it is required that such additive is employed which makes the specular gloss of the surface of molded member, that is, the specular gloss Gs(60 degrees) specified in JIS Z8741, be not greater than 15 % by adding said additive.

Since the specified width of ridge lines 4 are exposed, as described above, on the outermost surface of the mat structure having a continuity of recessions 1 each being shaped into said inverted triangle bottom pyramid or quadrangle bottom pyramid, an external appearance and the matting effect of the mat structure will be marred when the damage is formed on said ridge lines due to an external force applied thereon. Therefore, it is preferable to prevent the damage from being made and it is also preferable that the proportion of an area of the ridge lines 4 to the overall area of the mat structure is made less than a certain value by setting the bottom side length of said recession 1 not less than 5 mm in order to make said damage inconspicuous and to accomplish desired matting effect even if the damage is formed thereon.

Further, to prevent the deterioration of the external appearance caused by the damage formed on said ridge lines 4, it is preferable that the lightness of the molded member with mat structure is determined not less than 25 so that said damage is inconspicuous. Further, two kinds of mat structures may be used properly, for example, the mat structure having a great number of projections 3 formed continuously thereon may be applied to a place where a surface of the mat structure is exposed to outside and said ridge lines 4 would be liable to be damaged if it were used thereon, while to other places may be applied another mat structure having a great number of recessions 1 formed continuously thereon.

Though a painting is usually employed as a method to prevent the ridge lines 4 formed on the outermost surface of the mat structure having a continuity of recessions 1, each being shaped into triangle bottom pyramid or quadrangle bottom pyramid, from being damaged, there occurs a problem that, when the paint is sprayed onto said mat structure, the paint tends to gather in said recession 1. In addition, the paint hardly attaches on the ridge portions 4 of a narrow width.

To avoid an occurrence of the above problem and to form a uniform paint film all over the surface of the mat structure so that the ridge lines 4 is prevented from being damaged, it is preferable that, as shown in Fig. 19, the paint is sprayed onto a mat structure 6 mounted on a surface of a rotary drum 5 by a paint spray 7 while rotating said rotary drum 6. According to this painting method, since a uniform paint film may be formed all over the surface of mat structure preventing the paint from being gathered in the recessions 1, there may be provided an advantage that the ridge lines 4 is securely protected and thereby said ridge lines 4 can be effectively prevented from being damaged.

As described above, the present invention provides an advantage that, since a great number of recessions or projections converging toward apexes thereof are formed continuously on the surface of the molded member and the structural adjacent angle formed between the surrounding walls of the adjacent recessions or projections is determined not greater than 35 degrees, the incident light onto the surface of the molded member is reflected toward a direction approximately parallel with that of the incident light so that there is little light reflected toward the sight line of the observer and thereby an excellent matting effect may be accomplished with simple configuration.

In addition, the present invention provides another advantage that, since a great number of recessions each being shaped into inverted triangle bottom pyramid converging toward the apex thereof are formed on the surface of the molded member and the structural adjacent angle formed between surrounding walls of the adjacent recessions is determined within the range of 65 to 75 degrees, the incident light onto the surface of the molded member causes multiple reflection and, as the reflection is repeated, the quantity of reflected light decreases gradually and as a result most light is absorbed by said molded member and thereby an excellent matting effect may be accomplished with simple configuration.

Although the present invention has been explained with reference to a specific, preferred embodiment, one of ordinary skill in the art will recognize that modifications and improvements can be made while remaining within the scope and spirit of the present invention. The scope of the present invention is determined solely by the appended claims.

## Claims

1. A mat surface structure characterized in that a great number of recessions or projections, each converging toward an apex thereof, are formed continuously on a surface of a molded member and a structural adjacent angle formed between surrounding walls of adjacent recessions or projections is determined not greater than 35 degrees excluding 0 degree.

2. A mat surface structure characterized in that a great number of recessions, each being shaped into inverted triangle bottom pyramid converging toward an apex thereof, are formed continuously on a surface of a molded member and a structural adjacent angle formed between surrounding walls of adjacent recessions is determined within a range of 65 to 75 degrees.

3. A mat surface structure as recited in either of claim 1 or 2 wherein a great number of recessions converging toward respective apexes thereof are formed continuously on the surface of the molded member, said mat surface structure characterized by that a width of ridge lines formed on an outermost surface of said molded member is determined within a range of 0.01 to 0.1 mm and a center line average height of said ridge lines is determined within a range of 0.5 to 20 µm.

4. A mat surface structure as recited in either of claim 1 to 3 wherein a great number of recessions, each being shaped into inverted pyramid converging toward an apex thereof, are formed continuously on the surface of the molded member, and said mat surface structure characterized in that a side length of said ridge lines of the recessions is determined not less than 5 mm.

5. A mat surface structure characterized in that a great number of projections, each converging toward an apex thereof, are formed continuously on a surface of a molded member and a structural adjacent angle formed between surrounding walls of adjacent projections is determined not greater than 50 degrees excluding 0 degree.

6. A mat surface structure as recited in either of claim 1 to 5, characterized by that a great number of recessions or projections are formed continuously on a surface of an interior member of a vehicle.

7. A mat surface structure as recited in claim 2, characterized in that said great number of recessions, each being shaped into inverted triangle bottom pyramid converging toward an apex thereof, are formed continuously on a surface of an interior member of a vehicle excluding an area within a range of 10 to 25 degrees of horizontal angle and within a range of 20 to 30 degrees of vertical angle with respect to a sight line of a driver.

8. A mat surface structure as recited in either of claims 1 to 7, characterized by that a great number of recessions or projections are formed continuously on a background of instruments.

9. A mat surface structure as recited in either of claims 1 to 8, characterized in that, when said mat surface structure is formed on a curved surface of a molded member with a specified curvature, the structural adjacent angle is compensated in response to a radius of curvature of said curved surface and an arranging pitch of the recessions.

10. A mat surface structure characterized in that a great number of recessions, each being shaped into an inverted triangle bottom pyramid converging toward an apex thereof, are formed continuously on a surface of a molded member and a structural adjacent angle between surrounding walls of adjacent recessions is determined not greater than 70.6 degrees excluding 0 degree.
